# EUROPEAN PATENT SPECIFICATION

(11) **EP 2 241 759 B1**
(45) Date of publication and mention of the grant of the patent: **20.06.2012**
(21) Application number: 10159200.4
(22) Date of filing: 07.04.2010
(51) Int. Cl.: F04D 13/08, H02K 9/06

(54) **Device for moving a liquid, of the semi-submerged vertical type**
Halb eingetauchte, vertikale Vorrichtung zum Bewegen einer Flüssigkeit
Dispositif pour déplacer un liquide de type vertical partiellement submergé

(30) Priority: 08.04.2009 IT UD20090072
(43) Date of publication of application: 20.10.2010
(73) Proprietor: Frattin, Ms. Anna, 33074 Fontanafredda (IT)
(72) Inventor: Frattin, Ms. Anna, 33074 Fontanafredda (IT)
(74) Representative: Petraz, Gilberto Luigi

(56) References cited:
- DE-U1- 29 818 704
- DE-U1- 29 820 792
- US-A- 4 670 677
- US-A- 6 059 535

## Description

### FIELD OF THE INVENTION

The present invention concerns a device for moving a liquid, of the type with a semi-submerged vertical drive axis, which can be used to move a cooling liquid, for example to transport the liquid from a containing tank to the final point of use, particularly, but not only, in refrigerators for catering, for example for tapping drinks such as beer, for domestic use or for the food industry, or in machine tools, or again for stirring the liquid in the containing tank.

### BACKGROUND OF THE INVENTION

The use of a pumping device is known, to transport a cooling liquid through a delivery circuit from a suitable containing tank toward a user machine to be cooled, for example a machine tool.

During use, the level of the liquid diminishes and makes it necessary to fill up the liquid inside the tank.

In some applications, the cooling can also take place during the passage in the delivery circuit, for example in the application to refrigerators used in the public catering sector for the tapping of drinks. In the latter case, there is also a second circuit, called the return circuit, to recover the liquid.

Usually, the pumping device which is used in the state of the art is of the type with a vertical drive axis, semi-submerged in the liquid, and is installed on an upper wall of the containing tank.

The known pumping device is usually provided with a motor assembly, a ventilation unit and a hydraulic pumping member, supported by a support element, called shank, provided on the lower side of the motor assembly.

The known pumping device is installed above the containing tank so that the ventilation unit and the motor assembly are not normally in contact with the liquid below, while the shank is partially immersed and the hydraulic pumping member is completely immersed in the cooling liquid.

The motor assembly comprises an electric motor assembled on a structure which supports it. This support also acts as at least partial protection for the motor and as an electric protection. The motor assembly comprises an internal cylinder, called rotor, in which, along a common axis of alignment, a drive shaft is inserted in order to drive in rotation the hydraulic pumping members. The free rotation of the drive shaft is guaranteed by two bearings, upper and lower, positioned on opposite sides of the rotor, or equivalent components such as bushings or brasses.

The ventilation unit, able to cool the motor, is traditionally assembled on the upper side of the motor assembly and comprises a cooling fan attached on one end of the drive shaft. The fan pushes and conveys the air taken from the environment toward the motor assembly, cooling it.

The hydraulic pumping member normally has one or more hydraulic chambers in which, generally, a hydraulic rotor or turbine is mounted, driven by the drive shaft.

The motor assembly generates a rotational movement which is transferred to the drive shaft and then to the hydraulic pumping member, for the rotation of the rotor, which puts the liquid under pressure which is pushed toward one or more exit or delivery pipes, connected to the delivery circuit. The same rotational movement is also transferred to the cooling fan, which pushes the air toward the motor assembly, to cool it.

Normally, the liquid contained in the tank is maintained at a minimum safety distance of about 10 mm - 20 mm from the lower side of the motor assembly, so that the same liquid, rising along the drive shaft, does not damage the elements which make up the motor assembly when the liquid is topped up, for example in the case of machine tools.

In the case in which there is a return circuit, as in the case of refrigerators intended for tapping drinks, topping-up is less frequent. In this case, however, the refrigerator produces a layer of ice in the containing tank, which increases the volume of liquid and consequently its level.

Often, this rise in the level causes the liquid, penetrating along the shank or support structure and/or along the drive shaft, to enter into the motor assembly, damaging the electric coils and first of all the support bearings of the drive shaft, causing malfunctioning and the premature end of the known pumping device.

Indeed, it is well-known in the state of the art that the main cause of forced and premature dysfunctions and replacements of known pumping devices in the applications in question, machine tools and refrigerators for tapping drinks, is precisely the drowning of the motor bearings, in particular of the lower bearing located in the lower part of the motor assembly.

A known pumping device is described for example in the document US-A-6,059,535. This known pumping device includes an electric motor and is used to maintain the level of a liquid in a tank.

A known motor assembly is described in the document US-A-4,670,677. This motor assembly comprises a shell, open at the lower part, inside which a stator/rotor unit which drives a shaft is housed. The motor assembly comprises a cooling fan disposed on the front side of the shaft, with respect to the stator/rotor unit. This known motor assembly has the disadvantage that, being completely open in correspondence with the fan so as to allow the passage of cooling air taken in by the fan itself, which directly strikes the stator/rotor unit, it is not protected from possible infiltrations of water, flooding of the inside of the shell, the bearings and other sensitive components, as well as the entrance of humidity, dust, dirt or other, being thus exposed to risks of forced and premature dysfunctions and replacements.

Purpose of the present invention is to achieve a device for moving liquid, of the semi-submerged vertical type, which is protected from flooding of the internal members of the motor assembly, thus prolonging the operating life, even in the event of excessive or unforeseen rise of the level of the cooling liquid and being able to operate in safety even in these difficult situations.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

According to the present invention, a device for moving a liquid can be used in association with a tank for containing the cooling liquid in a refrigeration unit, for example but not exclusively, in a machine tool, or in a plant for tapping drinks, and is typically located vertical, semi-submerged in the liquid.

In accordance with the above purpose, the movement device according to the present invention comprises:
- a motor assembly,
- a ventilation unit to cool the motor assembly,
- movement means, kinematically connected to the motor assembly, which movement means are able to be at least partly submerged in the liquid and are able drivable by the motor assembly in order to move the liquid.

The motor assembly, the ventilation unit and the movement means of the liquid are disposed along a common axis, an axis disposed vertical during normal use.

According to the present invention, the ventilation unit is disposed, along the common axis, between the motor assembly and the movement means of the liquid, so as to distance, during normal use, the motor assembly from the liquid below, while still maintaining the same bulk of the traditional solutions known in the state of the art.

In this way, it is possible to keep the motor assembly from contact with the cooling liquid, prolonging the effective duration of the device, protecting the bearings, particularly the lower bearings, the electric coils and/or other sensitive members of the motor, even in the case of malfunctions or interruptions in operations or other foreseen or unforeseen situations in which the level of the liquid can rise in an excessive and uncontrolled manner.

The device according to the invention can operate in safety even in these difficult situations where the level of the liquid rises.

In advantageous forms of embodiment, the motor assembly can be an electric motor with low consumption, for example a brushless motor, an inverter motor or other.

In some forms of embodiment of the present invention, the motor assembly comprises a containing structure, disposed close to the ventilation unit, and a motor body. The containing structure is of the closed type and has a housing compartment internally in which the motor body is located, which is substantially isolated with respect to the outside. In this way the motor body, being isolated from the outside, is protected from the accidental entrance of water, humidity, dust, dirt or other.

In some forms of embodiment of the present invention, the containing structure has one or more passage ways, outside the housing compartment, which are in communication on one side with the ventilation unit and on the other side with the outside of the containing structure. The cooling air coming from the ventilation unit passes through the one or more passage ways, along a route which takes the air to lap the outside surface of the containing structure. The one or more passage ways are conformed to direct the cooling air at least along the outside surface of the containing structure, or inside ventilation channels provided along the outside surface, as shown hereafter in the description, so as to cool the motor assembly.

In some forms of embodiment of the invention, the containing structure has externally heat exchange means suitable to exchange heat with the cooling air arriving, through the one or more passage ways, from the ventilation unit, in order to cool the motor body indirectly.

Advantageously the heat exchange means are configured as a surface with radial cooling fins, which completely or partly surrounds at least the lateral surface of the containing structure, preferably itself constituting said lateral surface, separating the internal housing compartment of the motor body from the outside. In this way, even though there is no direct contact between the cooling air and the motor body, in order to eliminate the risk of contact between the motor and water or other, the present invention in any case guarantees an efficient cooling of the motor body, which occurs indirectly by means of heat exchange with the heat exchange means

In other forms of embodiment, the heat exchange means are formed by one or more external ventilation channels, or chambers, made on the external surface of the containing structure of the motor. In particular, the external channels are defined by a closed cross section, which develops longitudinally from the lower part to the upper part of the containing structure, being open at the lower part and at the upper part for the passage of the cooling air. In this form of embodiment, the cooling air is conveyed from the bottom upward, passing through the internal surface of the channels, in any case always outside the housing compartment of the motor body.

In other forms of embodiment, it is possible to provide, in combination, both a finned surface and external cooling channels.

In some forms of embodiment of the present invention, the containing structure has at the upper part deflector means able to deflect the cooling air arriving from the ventilation unit toward an upper side of the containing structure where the motor body is contained. This allows to cool, at least partly, the upper portion of the motor assembly too.

According to a variant of the present invention, the ventilation unit is directly connected to the motor assembly, on a lower surface of the containing structure which houses the motor body of the motor assembly.

Another advantage of the present invention is that the upper zone of the motor assembly can be used for supporting other objects, or for assembly close to or in contact with a wall, thus covering the upper zone, without for this reason obstructing or blocking the ventilation, as can happen in known solutions with upper ventilation, since the ventilation, in the present invention, occurs from the lower part of the motor assembly toward the upper part.

In some forms of embodiment, the pumping device comprises a support structure able to support the movement means, which is connected on one side to the movement means and on the other side to the ventilation unit.

According to a variant embodiment, the movement means comprise a hydraulic pumping member. In this case the device according to the present invention is used to pump the liquid from the containing tank to a cooling circuit. According to this variant, the support structure can, in accordance with one form of embodiment, assume the shape of an oblong support element, commonly called shank, which supports the hydraulic pumping member from below.

Therefore, in this variant by the term "movement" we mean the pumping of the liquid, that is, the transport of the liquid from the tank through the cooling circuit and toward the user machine to be refrigerated.

In accordance with another variant, the movement means comprises a stirrer element, of the screw or blade type for example, which has the function of keeping the refrigeration liquid stirred in the containing tank, advantageously to reduce the formation of layers of ice at the edges of the tank, thanks to the erosion of the ice by the liquid which is stirred.

Therefore, according to this further variant, by the term "movement" we mean the action of stirring the liquid in the tank.

Still another variant provides that the movement means comprise both the hydraulic pumping member and the stirrer element, advantageously integrated and aligned on the same axis and in this case the term "movement" includes both the meanings.

A refrigeration unit also comes within the field of the present invention and comprises:
- a container, or containing tank, which comprises a refrigeration compartment in which a cooling liquid is contained;
- a device for moving a liquid, as set forth above, which is assembled at least partly inserted in the refrigeration compartment, above the tank.

The ventilation unit of the movement device is assembled, on the lower side of the motor assembly, above the movement means of the liquid so as to distance, during normal use, the motor assembly from the level of liquid in the refrigeration compartment containing the liquid.

In this way, when the level of liquid in the refrigeration compartment increases, the liquid does not reach the motor assembly, and in particular the bearings and the coils, preserving the functionality and, at most, it overflows from the container, dispersing in the environment, or is collected by suitable collectors. A variant of the present invention provides that the movement device, whether it is intended for pumping, stirring or both, is mounted directly above an upper wall of the containing tank, inserted in a suitable aperture through the upper wall itself. Advantageously, in this case the ventilation unit is disposed above the upper wall of the container, externally to the refrigeration compartment.

According to another variant; the movement device according to the invention is mounted above an upper wall, inserted in a suitable aperture, of the body of the machine tool, or refrigeration plant, to which the refrigeration unit is associated.

Another variant provides that the movement device according to the invention is mounted suspended, below the upper wall of the body of the machine tool or refrigeration plant, for example by using attachment means associated with the upper part of the motor assembly, such as screw elements.

According to a variant, the ventilation unit is provided with attachment means, for example flange type, so it can be mounted. According to a variant, the flange extends laterally from the body of the ventilation unit and is shaped so as to be associated and attached to a supporting plane, such as the wall of the tank or the machine tool or refrigeration plant.

According to one form of embodiment of the invention, the movement device comprises a support structure to support the movement means, which is connected on one side to the movement means and on the other side to the ventilation unit.

According to a variant of the present invention, the support structure, in the case where a hydraulic pumping member is used, is a single piece formed by an oblong element, inside which the drive shaft is housed to drive the hydraulic member, and by the body of the hydraulic pumping member itself, for example obtained by injection molding of a plastic material.

In some forms of embodiment, the support structure is made in a single body with the ventilation unit and with the hydraulic pumping member. In some forms of embodiment, the support structure is a single piece formed by the oblong element and by the containing body of the ventilation unit.

Another variant provides that the support structure is a single piece formed by the oblong element, by the body of the hydraulic pumping member and also by the containing body of the ventilation unit.

A further variant provides that the support structure is made as a separate piece both from the body of the hydraulic pumping member and also from the containing body of the ventilation unit, which are subsequently assembled and attached.

Advantageously, the ventilation unit has an extension in height, particularly with respect to the lying plane of the upper wall, such as to define a safety distance between the maximum level that the liquid can reach in the containing tank and the position of the super-elevated motor assembly, which is thanks to the distancing function the interposed ventilation unit.

According to a variant embodiment, the ventilation unit comprises a containing element, such as a cup or a cap, inside which an aeration seating is made in which a cooling fan is housed; the containing element is above the containing tank, outside the relative refrigeration compartment.

According to a variant embodiment, the ventilation unit, or the containing element thereof, has an upper aperture by means of which the cooling fan is facing toward the motor assembly, so as to direct the cooling air toward it.

The ventilation unit, moreover, also has a lower wall, suitably holed, to take in the cooled air.

According to one form of embodiment, the lower wall of the ventilation unit faces toward the containing tank. The lower wall, according to a variant, can rest on a supporting wall or plane of the containing tank or of the machine or implant to which the movement device in question is associated.

According to one form of embodiment of the ventilation unit, a connection element, for example annular or other geometry, extends from the lower wall so as to connect to the support structure, to define a determinate region of coupling.

The containing element, or cup, is shaped so as to convey the air taken in from below toward the motor assembly.

According to another variant, the ventilation unit is made as a single piece, for example obtained by means of injection molding of a suitable plastic material. The single piece is formed by a fan shaped so as to define a peripheral cup profile, or conveyance compartment, to direct the air taken in toward the motor assembly.

The device for moving a liquid according to the present invention has a plurality of air holes made on the lower wall of the ventilation unit, directly facing toward the refrigeration compartment, through which the cooling fan takes in the air to cool the motor body.

Advantageously, therefore, the fan can take in a stream of cold air from the refrigeration compartment, which is normally at a lower temperature than the external environment, thus improving the efficiency of cooling the motor body.

In particular, according to a variant, the air holes comprise first holes made inside the connection element between the ventilation unit and support structure, and second holes disposed outside the coupling region between the connection element and the oblong element.

The device according to the present invention can also be provided with third air holes made on the lateral surface of the connection element. The third holes perform an advantageous security function, allowing to always have a ventilation air intake for the fan, even in the case where there is a rise in the level in the support structure and flooding.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a three-dimensional view in section of a device for moving a liquid according to the present invention mounted on a tank containing a cooling liquid;
- fig. 2 is a plane view from above of a device for moving a liquid according to the present invention mounted on a tank containing a cooling liquid;
- fig. 3 is a section from III to III of fig. 2;
- fig. 4 is a partly sectioned three-dimensional view of the movement device according to the present invention;
- fig. 4a is an enlarged detail of part of fig. 4;
- fig. 5 is a plane view from above of the device in fig. 4;
- fig. 6 is a section from VI to VI of fig.5;
- fig. 7 is a partly sectioned three-dimensional view from below of the movement device according to the present invention;
- figs. 8a, 8b and 8c show, respectively, in a plane view from above, a side view and section from VIII to VIII of fig. 8a, a variant of the embodiment of a part of the device in fig. 1;
- fig. 9 shows a variant assembly in section, above a wall of a machine tool or refrigeration plant, of the device for moving a liquid according to the present invention;
- fig. 10 shows a variant assembly in section, suspended below a wall of a machine tool or refrigeration implant, of the device for moving a liquid according to the present invention;
- fig. 11 is a variant embodiment of the movement device according to the present invention.
To facilitate comprehension, identical number references have been used, where possible, to identify identical common elements in the drawings. It is understood that elements and characteristics of one form of embodiment can be conveniently incorporated in other forms of embodiment without further clarification.

### DETAILED DESCRIPTION OF A PREFERENTIAL FORM OF EMBODIMENT

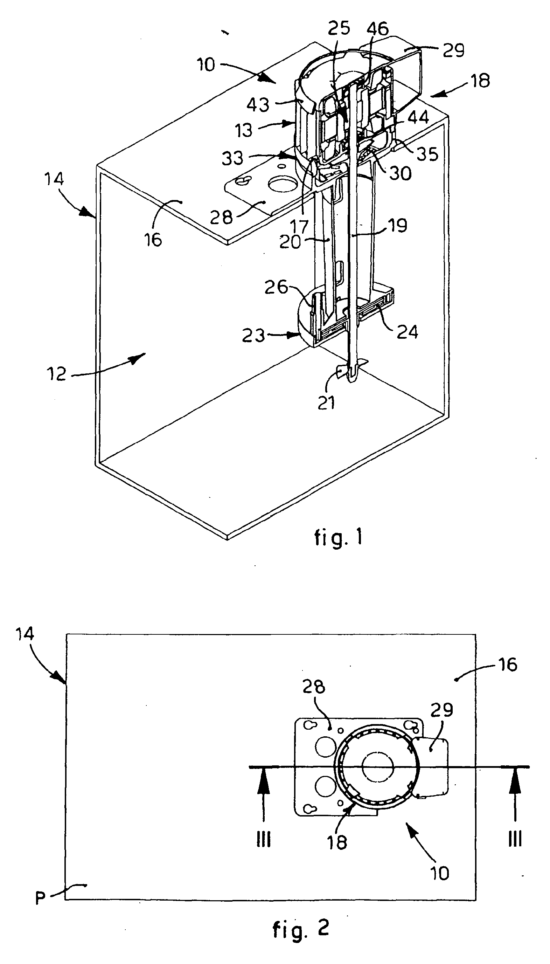

With reference to figs. 1-7, a device 10 for moving a liquid, with a vertical drive axis, according to the present invention is shown in the form of embodiment of a device for pumping a cooling liquid 11.

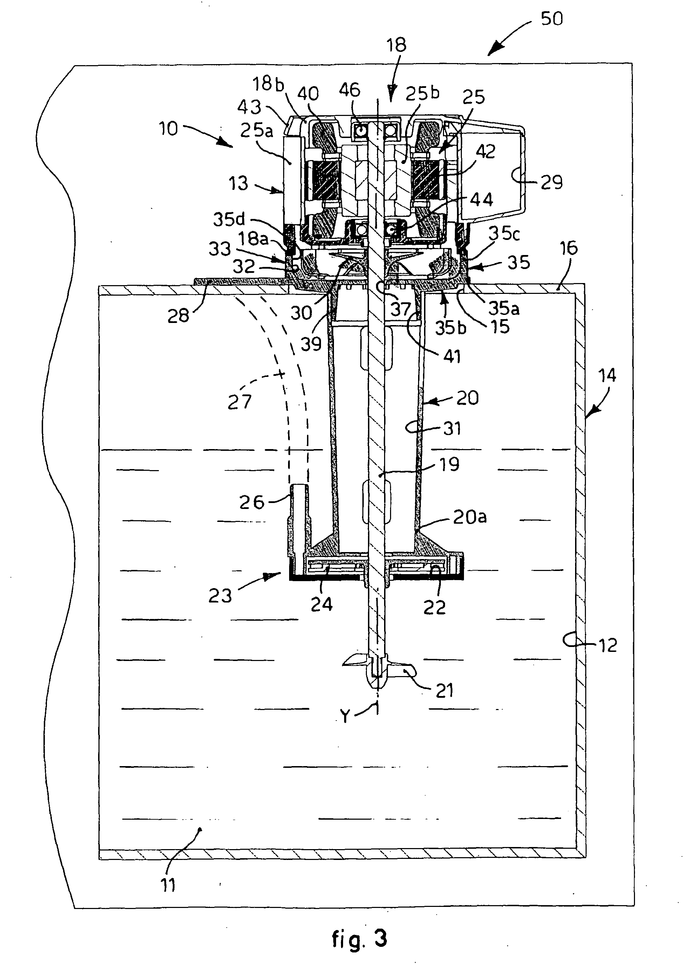

In particular, the device 10 is shown installed on a containing tank 14 having a refrigeration compartment 12 containing cooling water 11, or other cooling liquid (for example glycol water, water-oil emulsion or other), for a refrigeration unit 50 (fig. 3), shown only schematically in the drawings, of a refrigerator used in a tapping plant for drinks, for example for tapping beer in bars.

It is clear that the same device 10 can be used for pumping a liquid to cool a machine tool.

In particular, the device 10 is attached, along a vertical axis Y (fig. 3), on a support plane defined by a horizontal upper wall 16 of the containing tank 14, by means of a suitable flange 28 (fig. 2).

The upper wall 16 has an aperture 15 for the passage of part of the device 10, in order to partly emerge it in the water 11, as explained hereafter in the description.

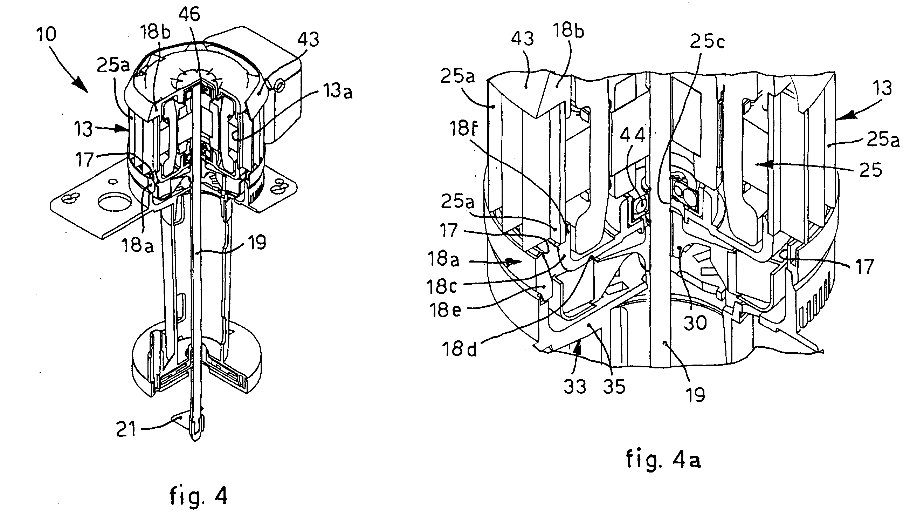

The device 10 according to the present invention comprises a motor assembly 18 having a motor body 25 inserted in the housing compartment 13a defined by a containing structure, or shell 13 (figs. 4 and 4a).

The containing structure or shell 13, normally made of aluminum, is completely closed at the top, at the bottom and at the sides, so as to close in and completely surround the motor body 25 inside it, thus protecting it from the entrance of water, humidity, dust, dirt or other.

This containing structure or shell 13 is formed by a lower side or wall 18a, an upper side or wall 18b and by a lateral surface with cooling fins 25a, thus delimiting the housing compartment 13a which surrounds the motor body 25. The lower side or wall 18a, the upper side or wall 18b and the lateral surface with cooling fins 25a are constrained to each other by means of male/female coupling and tie rods with screws or other equivalent attachment means. The advantage of the embodiment in aluminum, or other metal which allows good heat exchange, is that it increases the effectiveness of the cooling by means of the cooling fins 25a. In particular, aluminum is advantageous in that, as well as allowing a good heat exchange, it is known to be a material which is resistant to corrosion.

The device 10 also comprises a ventilation unit 33, mounted on the lower side 18a (fig. 3) of the containing structure or shell 13 which houses the motor body 25 of the motor assembly 18, an oblong element or shank 20, cylindrical in shape, or other suitable shape, with an internal cavity 31; the shank 20 extends downward from the ventilation unit 33 along the vertical axis Y, and a hydraulic pumping member 23, drivable by the motor assembly 18 to pump the cooling water 11 (fig. 3).

The hydraulic pumping member 23 is supported at a lower end 20a of the shank 20.

During normal use, the shank 20 is semi-submerged in the water 11, passing through the aperture 15 of the upper wall 16, as can be seen in fig. 3, while the hydraulic pumping member 23 is completely submerged.

A technical compartment 29 (fig. 3) can be provided laterally, to house electronic or electromechanical components to command and control the device 10.

The motor body 25 inserted in the housing compartment 13a comprises, in traditional fashion, a rotor 25b, electric coils 40, a stator 42, disposed along the vertical axis Y, in which a drive shaft 19 is inserted, able to rotate around the vertical axis Y. The free rotation of the drive shaft 19 is allowed by bearings, in this case two in number, lower 44 and upper 46, positioned on opposite sides of the rotor 25b of the motor assembly 18.

The drive shaft 19 extends from the motor body 25, in this case downward, passing through an aperture 25c made in the lower side 18a of the containing structure or shell 13, in which the hydraulic seal is guaranteed by the lower bearing 44, watertight or normal, and possibly, if necessary, by additional sealing casings.

From here the drive shaft 19 extends through the internal cavity 31 of the shank 20, to be coupled with the hydraulic pumping member 23, in particular with the relative hydraulic rotor or turbine 24.

The ventilation unit 33 comprises a containing element 35 shaped like a cup, directly coupled with the lower side of the motor assembly 18, which has inside it an aeration seating or chamber 32 in which a cooling fan 30 is housed (fig. 3).

According to the variant shown in figs. 1-7, the containing element 35 has a suitable central aperture 37 for the passage of the drive shaft 19 (fig. 3). The cooling fan 30 is thus directly attached to the drive shaft 19 and made to rotate thereby, thus cooling the motor assembly 18.

The containing element 35 has a cylindrical lateral wall 35c, or other suitable shape, also quadrangular according to necessity (fig. 3), an upper aperture 35d by means of which the cooling fan 30 is facing toward the containing structure or shell 13 that contains the motor body 25, and a lower face or wall 35b, which develops substantially on a plane orthogonal to the vertical axis Y, parallel to the plane P on which the upper wall 16 lies, normally resting on the upper wall 16 of the containing tank 14.

The containing element 35 is thus directly located, when the device 10 is installed, in contact with the upper wall 16.

The containing element 35 also has an annular wall or bushing 39, which acts as a connection element with the shank 20, defining a relative coupling region 41 (fig. 3).

In this case the annular wall or bushing 39 has a substantially cylindrical development, mating in shape with the aperture 15 and extends from the lower face 35b downward; it is inserted into the aperture 15 and coupled with the shank 20.

The containing element 35 has an extension in height, with respect to the lying plane P of the upper wall 16, such as to distance the motor assembly 18 by a desired distance from the level of the water 11 in the cooling compartment 12, avoiding possible flooding, in particular of the lower bearings 44 and the electric coils.

Advantageously, the flange 28 for attachment to the upper wall 16 is made as a lateral appendix of a planar type of the containing element 35 in which the cooling fan 30 is housed. In this way, the flange 28 can easily be positioned and attached on the upper wall 16 of the containing tank 14.

Consequently, when the device 10 is mounted on the containing tank 14, the ventilation unit 33 goes to rest directly on the upper wall 16, to occupy the aperture 15, remaining in axial position thanks to the interference with the edge of the aperture 15, on one side by means of a suitable step 35a (fig. 3), on the other side by means of the flange 28, which is attached in a known manner.

In this way the containing structure or shell 13 that contains the motor body 25 is not in direct contact with the upper wall 16, but is raised by some centimeters, substantially the height of the part of the ventilation unit 33 that protrudes upward from the upper wall 16. Therefore, the risk of flooding the bearings is completely avoided, especially the lower bearings 44. In fact, even if the water 11 rises in level, the maximum height it can reach is that of the upper end of the containing tank 14, not more, since subsequently the excess water 11 inevitably overflows from the containing tank 14 and is dispersed in the surrounding environment, but leaving intact the bearings 44, 46, the coils and the other sensitive members of the motor body 25.

Moreover, the fact that the motor assembly 18 is substantially closed and isolated by the lower 18a and upper 18b walls and laterally by the cooling fins 25a entails that the motor assembly 25 contained in the housing compartment 13a is securely protected from infiltrations of water, flooding and contact in general with water, humidity, dust, dirt or other.

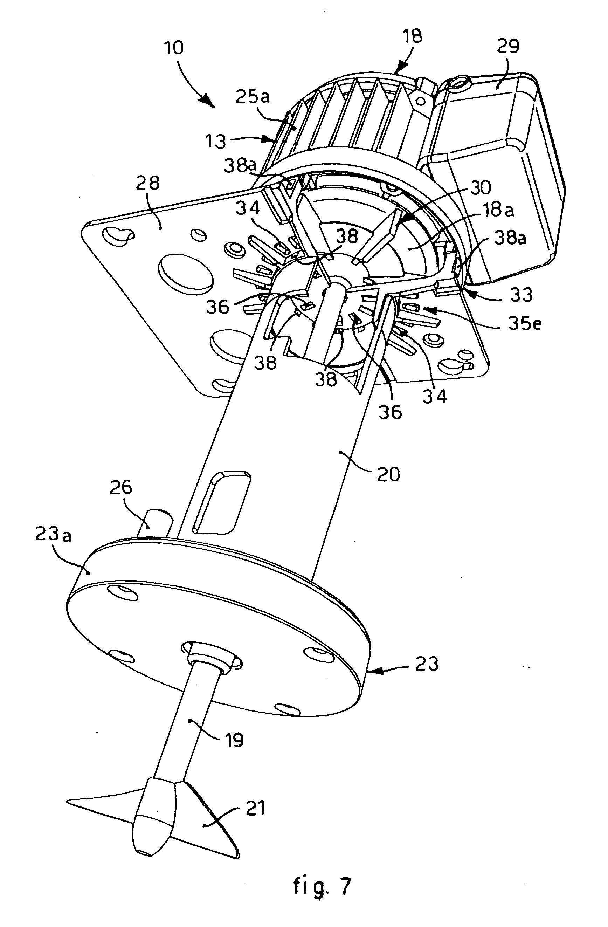

The ventilation unit 33 has air holes, by means of which the fan 30 takes in the cooling air. In particular, on the lower face 35b of the containing element 35 through air holes 34, 36 are made, in directions parallel to the vertical axis Y (fig. 7).

In this case, the air holes 34, 36 have an elongated section, like slits, directed radially with respect to the vertical axis Y and disposed around concentric circumferences with respect to the vertical axis Y.

According to one embodiment of the present invention, in particular, first air holes 34 are provided, which are made on the lower face 35b inside the annular wall or bushing 39, and therefore, in the final assembly, they are comprised within the bulk of the shank 20 inside the cavity 31 (fig. 7).

Furthermore, there are also second air holes 36, again made on the lower face 35b but along a strip 35e, advantageously annular, which surrounds the shank 20, outside the annular wall or bushing 39 and therefore outside the relative coupling region 41 (fig. 7).

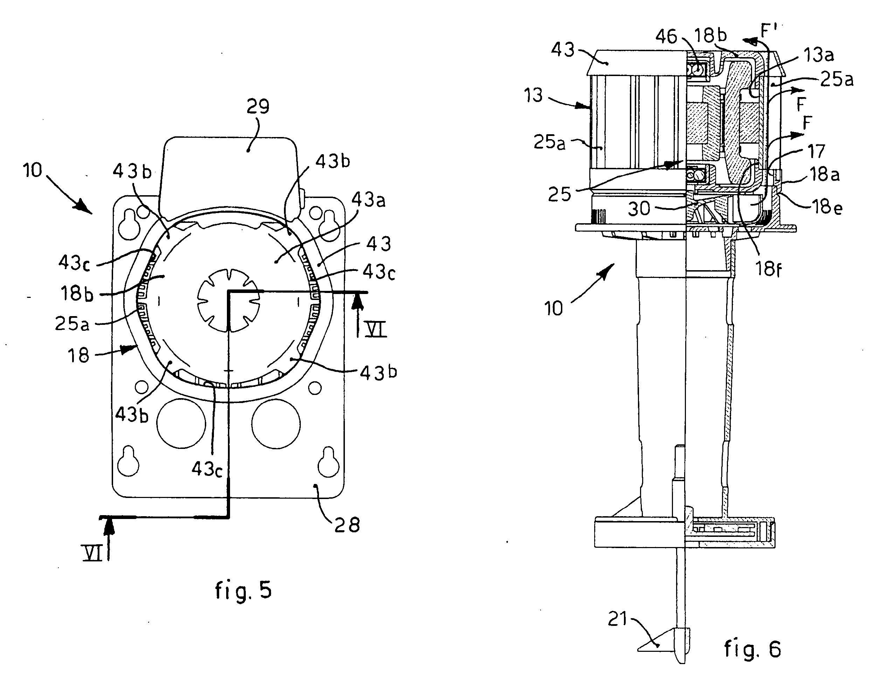

The cooling fan 30 takes in air, by means of the air holes 34, 36, from the cooling compartment 12 and conveys and thrusts it toward the containing structure or shell 13 which houses the motor body 25, cooling it. The air taken under force by the cooling fan laps the external surface of the containing structure or shell 13, as indicated by the arrows F in fig. 6, exchanging heat with the cooling fins 25a provided here.

Therefore there is no direct contact or heat exchange between the cooling air taken in by the cooling fan 30 and the motor body 25, but rather an indirect heat exchange by means of the cooling fins 25a. In this way, the motor body 25 can be closed inside the containing structure or shell 13, and is efficiently protected from water, dust, dirt or other.

In some forms of embodiment of the present invention, the lower side or wall 18a cooperates with the surface with cooling fins 25a so as to close the containing structure or shell 13 and to protect the motor body 25.

According to the present invention, the lower side or wall 18a is provided with one or more passage ways 17 that communicate on one side with the ventilation unit 33 so as to receive from the air holes 34, 36 the air taken in by the cooling fan 30, and on the other side with the external surface of the containing structure or shell 13 defined by the cooling fins 25a, thus determining a stream of cooling air outside the containing structure or shell 13, as can be seen schematized by the arrows F in fig. 6. This allows to close the motor body 25 completely inside the containing structure or shell 13, in any case obtaining a good cooling by means of the stream of cold air that laps the outside of the containing structure or shell 13, exchanging heat in an extremely efficient manner with the cooling fins 25a.

In some forms of embodiment, the one or more passage ways comprise a ventilation aperture or slit 17, in this case with an annular geometry, although nothing prevents the provision of other shapes, for example quadrangular, according to needs. The ventilation fissure 17 is made in through manner through the lower side or wall 18a, in a position outside the housing compartment 13a delimited by the containing structure or shell 13.

The aperture or fissure 17 extends along the whole (as in the embodiment shown in the attached drawings) or part of the ideal circumference that surrounds externally the motor body 25. The air taken in under force by the cooling fan 30 passes through the aperture or fissure 17, lapping the cooling fins 25a so as to cool the motor body 25 from the outside, not by direct contact and heat exchange, preserving the latter from contact with water, humidity, dust, dirt or other.

In some forms of embodiment the lower side or wall 18a consists of a discoid body that has a peripheral annular portion 18c and a central region 18d. The peripheral annular portion 18c comprises a first annular tooth 18e, more external in a radial direction and facing downward so as to cooperate with the ventilation unit 33 below, and, more internally in a radial direction, a second annular tooth 18f, facing upward, which cooperates with the surface having cooling fins 25a so as to close the containing structure or shell 13, delimiting the housing compartment 13a. In these forms of embodiment the aperture or fissure 17 is in a more external position than the second annular tooth 18f, in a radial direction, and is thus outside the housing compartment 13a and thus prevents water, humidity, dust, dirt or other from entering inside it, preserving the motor body 25 and its delicate components, in particular the lower bearings 44.

Advantageously, the air taken in by the cooling fan 30, directly from inside the cooling compartment 12, is at a lower temperature than the outside environment. In this way, one advantage of locating, according to the present invention, the ventilation unit 33 directly on the cooling compartment 12, between the shank 20 and the containing structure or shell 13 of the motor body 25 of the motor assembly 18, is that the air thus taken in allows a greater and/or quicker cooling of everything.

In some forms of embodiment of the present invention, the upper side or wall 18b of the containing structure or shell 13 is peripherally provided with deflector means to deflect the cooling air also above the containing structure or shell 13.

In this case the deflector means consist of an annular deflector 43 associated with the upper side or wall 18b (figs. 4, 4a, 5 and 6) by means of which the air arriving from the ventilation unit 33 and which has made a heat exchange also with the cooling fins 25a, is deflected and conveyed centrally. In the form of embodiment shown in the attached drawings, the annular deflector 43 is shaped like a truncated cone that progressively narrows from the bottom up, constituting a narrowing in the section which the cooling air passes through, which is thus deflected and accelerated in correspondence with the upper part of the containing structure or shell 13, improving heat exchange and cooling, in particular of the upper side or wall 18b, as can be seen clearly from the travel path of the arrow F' in fig. 6. Consequently, with this solution, the cooling air does not leave the upper part of the containing structure or shell 13 quickly, and on the contrary is suitably deflected so as to affect, at least partly, the upper side or wall 18b as well.

In this way, we obtain the cooling, although partial, of the upper part of the containing structure or shell 13 as well, which does not in itself include any specific heat exchange means. In this way, in particular, the upper bearings 46 are preserved, which otherwise could become worn due to the consumption of the lubricating grease with the high temperature.

In particular, as can easily be seen in fig. 5, the upper side or wall 18b has a central body 43a and protruding radial portions 43b which function as a support and spacer for the annular deflector 43, alternating with windows 43c. The air is deflected by the annular deflector 43 and forcedly conveyed through the windows 43c toward the upper side or wall 18b, so as to obtain the desired cooling effect.

In some forms of embodiment of the present invention, moreover, on the annular wall 39, which extends from the lower face 35b of the containing element 35, third air holes 38 are also made, through in a radial direction, along a circumference centered on the vertical axis Y (fig. 7).

Furthermore, the present invention provides fourth air holes 38a, made on the lateral surface of the containing element 35 of the ventilation unit 33 (fig. 7), in the external part of the containing tank 14, in this case above the upper wall 16.

The fourth air holes 38a, made laterally on the ventilation unit 33, perform an advantageous safety function in that they guarantee that the cooling fan 30 can always take in an adequate quantity of air, taken from the surrounding environment, even when the cavity 31 of the shank 20 rapidly fills with water until it reaches the level of the lower face 35b, preventing any air being taken in through the holes made on the same lower face 35b.

According to one embodiment of the present invention, the hydraulic pumping member 23 comprises an element 23a, in this case substantially disk-shaped (fig. 7), supported by the lower end 20a of the shank 20, inside which a hydraulic chamber 22 is made, able to house the hydraulic rotor or turbine 24, or other hydraulic element suitable for pumping.

The hydraulic rotor 24 is directly attached to the drive shaft 19, which makes it rotate to pump the water 11 toward a distributor element 26, which, by means of an exit or delivery pipe 27, of which only a part is shown in fig. 3, by a line of dashes, sends the cooling water toward the delivery circuit and from here toward the final user machine to be cooled. In the case of applications to refrigerators, cooling is achieved also during the passage in the delivery circuit and in this case, there is also a second circuit present, called return circuit, to recover the cooling water (not shown in the drawings).

The embodiment shown in figs. 1-7 shows the device 10 which, apart from pumping the liquid, can also function as a stirrer for the liquid. In particular, at the lower end of the drive shaft 19 a stirrer element 21 is mounted, in this case a screw, which, rotating together with the drive shaft 19, stirs the surrounding water, slowing down the formation of ice and promoting the erosion of the layers of ice that form at the sides of the containing tank 14.

It is clear that providing the integrated stirrer element 21 is understood to be a variant, since the device 10, in its embodiment for pumping only, can also be made without the stirrer element 21.

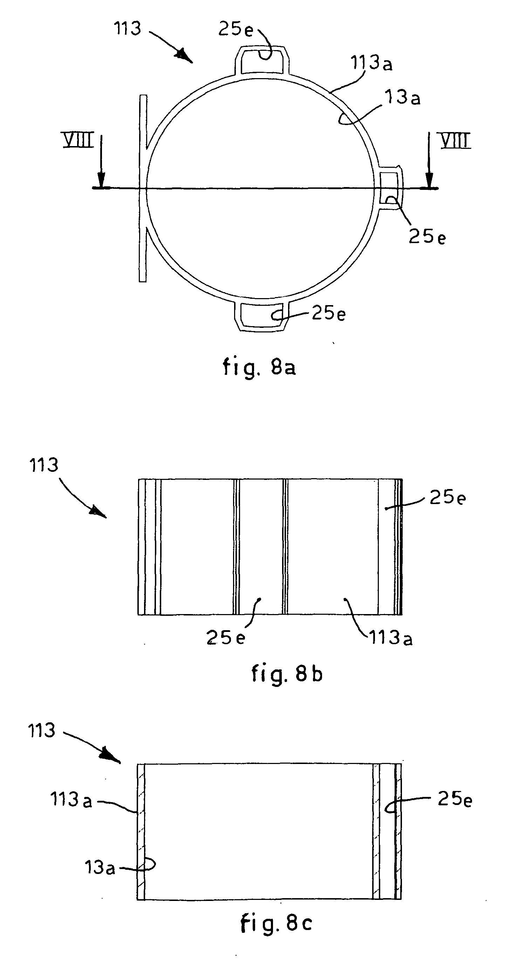

A constructional variant, shown in figs. 8a, 8b and 8c, provides that the lateral surface of the containing structure or shell 13, indicated by the reference number 113, includes ventilation channels, chambers or interstices 25e, in this case as an alternative to - but they could also be in association with - the cooling fins 25a, along which the cooling air is conveyed by the action of the cooling fan 30, again for the purposes of cooling the motor body 25 from the outside. In particular, the ventilation channels or chambers 25e are made externally on the lateral surface 113a of the containing structure or shell 113, and have a closed cross section or profile (fig. 8a) and longitudinal development (figs. 8b and 8c) from the bottom up, so as to channel the air along their internal walls, where it is accelerated by the relative narrowing in section, improving the efficiency of heat exchange. The ventilation channels or chambers 25e can be made around the lateral surface of the containing structure or shell 13 with a constant angular pitch, or variable according to needs.

Moreover, as mentioned above, in some forms of embodiment the ventilation channels or chambers 25e can be interspersed and combined with surfaces having cooling fins 25.

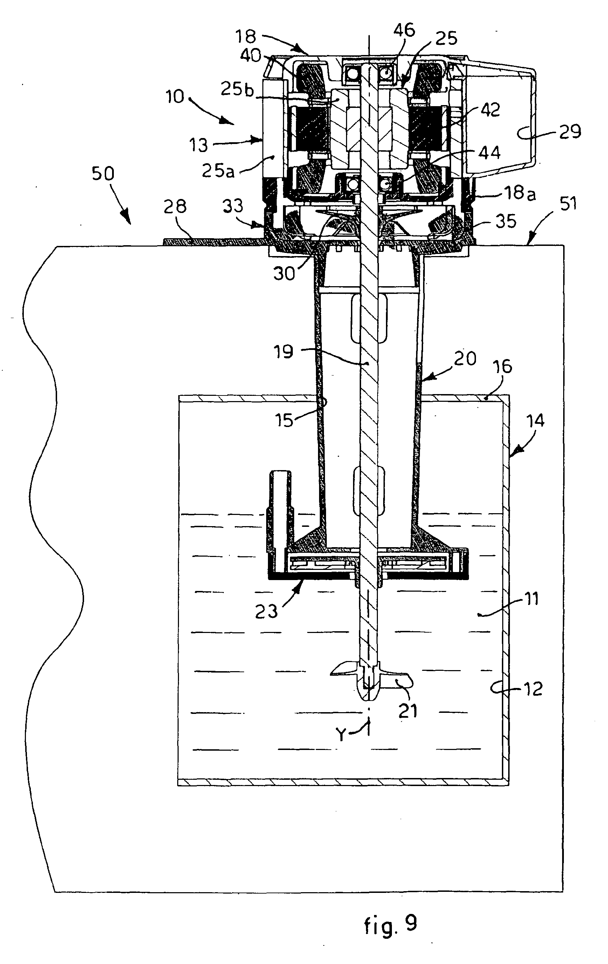

We shall now describe briefly the variants shown in figs. 9, 10 and 11, where identical reference numbers correspond to identical parts.

In particular, fig. 9 shows a variant assembly of the movement device according to the present invention, in which the device is mounted above a wall 51 of the refrigeration unit 50, attached above the wall 51 by means of the flange 28. The containing tank 14 is inside the refrigeration unit 50, and the device 10 is disposed inside it.

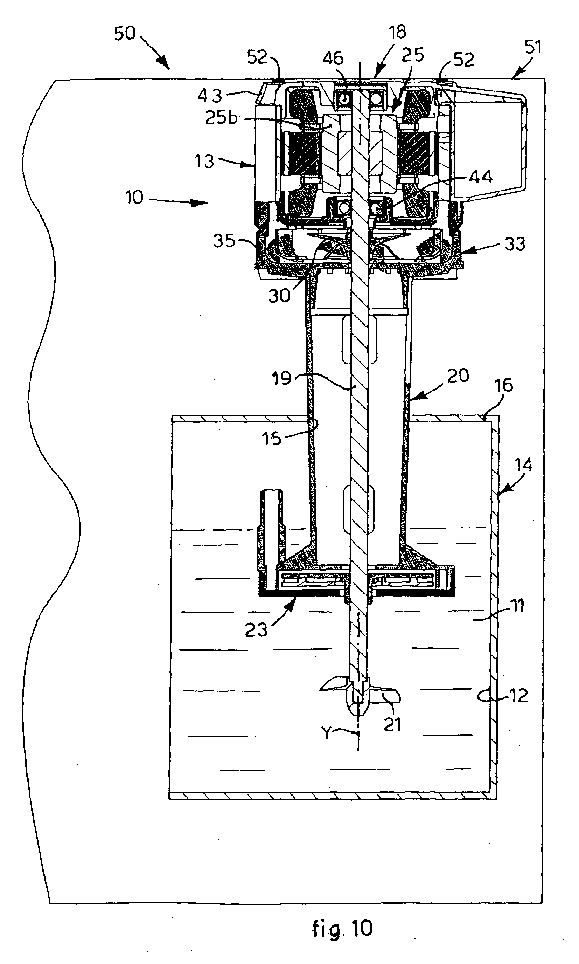

Fig. 10 shows another variant assembly of the movement device according to the present invention. In this variant the device 10 is mounted suspended below the wall 51 of the refrigeration unit, attached to the lower part of the wall 51 by means of attachment elements 52, such as screws or other. As in fig. 9, the containing tank 14 is inside the refrigeration unit 50, and the device 10 is disposed inside it.

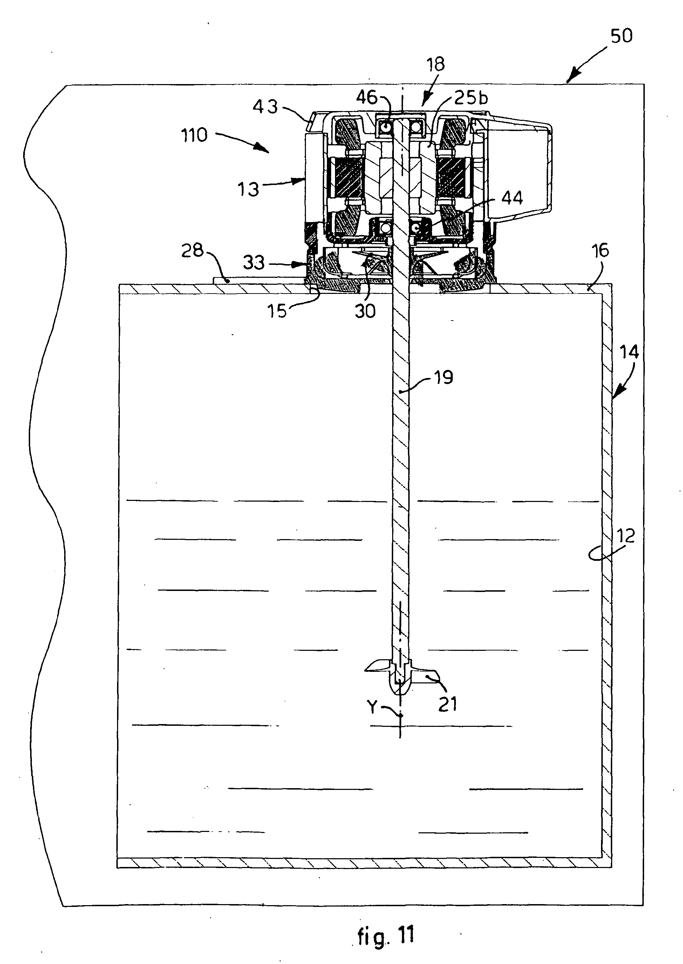

Fig. 11 is a constructional variant in which the movement device according to the present invention, indicated for convenience by the reference number 110, has the screw-type stirrer element 21 only, attached to the lower end of the drive shaft 19, with the function of stirring the liquid in the tank 12. In this variant, the device 110 is used only for the purposes of stirring the liquid, and therefore does not provide the hydraulic pumping member 23 or the shank 20 that supports it. The variant device 110 maintains all the advantages of distancing the motor assembly 18 from the level of liquid in the tank 12, preserving the members of the motor, the bearings, coils and rotor, from flooding, in particular the lower bearings 44.

It is clear that modifications and/or additions of parts may be made to the device 10, 110 for moving a liquid, of the semi-submerged vertical type as described heretofore, without departing from the field and scope of the present invention.

It is also clear that, although the present invention has been described with reference to specific examples, a person of skill in the art shall certainly be able to achieve many other equivalent forms of device for moving a liquid, having the characteristics as set forth in the claims and hence all coming within the field of protection defined thereby.

## Claims

1. Device for moving a liquid (11) comprising, disposed along a common axis (Y),
- a motor assembly (18),
- a ventilation unit (33) for cooling the motor assembly (18),
- movement means (21, 23), kinematically connected to said motor assembly (18), which movement means (21, 23) are able to be at least partly submerged in said liquid (11) and can be driven by the motor assembly (18) for moving the liquid (11),
**characterized in that** said ventilation unit (33) is disposed along said axis (Y), between said motor assembly (18) and said movement means (21, 23), so as to distance said motor assembly (18) from the liquid (11), wherein said motor assembly (18) comprises a containing structure (13, 113) disposed close to said ventilation unit (33) and a motor body (25), said containing structure (13, 113) being of the closed type and having a housing compartment (13a) inside it in which said motor body (25) is located, said motor body (25) being substantially isolated with respect to the outside, wherein said containing structure (13, 113) has one or more passage ways (17), external to said housing compartment (13a), which are in communication on one side with said ventilation unit (33) and on the other side with the outside of the containing structure (13, 113), the passage of cooling air arriving from the ventilation unit (33) occurring through said one or more passage ways (17), said one or more passage ways (17) being conformed to direct the cooling air along the external surface of the containing structure (13, 113) so as to cool said motor assembly (18).

2. Device as in claim 1, **characterized in that** the containing structure (13, 113) has externally, at least on the lateral surface, heat exchange means (25a, 25e) suitable for heat exchange with the cooling air arriving through said one or more passage ways (17) from the ventilation unit (33) so as to cool the motor body (25) indirectly.

3. Device as in claim 1 or 2, **characterized in that** said containing structure (13, 113) has deflector means (43) at the upper part, able to deflect the cooling air from the ventilation unit (33) toward an upper side (18b) of said containing structure (13, 113).

4. Device as in claim 1, 2 or 3, **characterized in that** the ventilation unit (33) is directly connected to a lower side (18a) of the containing structure (13, 113) of the motor assembly (18).

5. Device as in any claim hereinbefore, **characterized in that** it comprises a support structure (20) able to support the movement means (21, 23), which is connected on one side to the movement means (21, 23) and on the other side to the ventilation unit (33).

6. Device as in any claim hereinbefore, **characterized in that** the ventilation unit (33) comprises a cooling fan (30) and a containing element (35) inside which there is an aeration seating (32) inside which said cooling fan (30) is housed, said containing element (35) having an upper aperture (35d) by means of which the cooling fan (30) faces toward the motor assembly (18), and a lower wall (35b), through which the cooling fan (30) takes in air.

7. Device as in claim 6, **characterized in that** it has a plurality of air holes (34, 36) made on the lower wall (35b), through which the cooling fan (30) takes the air for cooling the motor assembly (18).

8. Device as in claims 6 or 7, **characterized in that** it comprises a connection element (39) that extends from the lower wall (35b) to connect to said support structure (20), so as to define a determinate coupling region (41).

9. Device as in claims 7 and 8, **characterized in that** said air holes comprise first holes (34) made inside the connection element (39) and second holes (36) disposed outside the coupling region (41) between the connection element (39) and said support structure (20).

10. Device as in claim 8 or 9, **characterized in that** it has third air holes (38) made on the side surface of the connection element (39).

11. Device as in any claim hereinbefore, **characterized in that** it has fourth air holes (38a) made on the side surface of the ventilation unit (33).

12. Device as in claim 6, **characterized in that** the containing element of the ventilation unit (33) is formed by a single body shaped so as to define a cooling fan with a relative chamber for convoying the cooling air toward the motor assembly (18).

13. Device as in claim 5, **characterized in that** said movement means comprise a hydraulic pumping member (23), said support structure (20) being made in a single piece with said ventilation unit (33) and with said hydraulic pumping member (23).

14. Device as in any claim hereinbefore, **characterized in that** said axis (Y) is vertical.

15. Refrigeration unit comprising:
- a container, or containing tank (14) which has a refrigeration compartment (12) where a cooling liquid (11) is contained;
- a device (10, 110) for moving the liquid (11) as in any claim hereinbefore, mounted at least partly inserted in the refrigeration compartment (12), above the container or containing tank (14).

16. Unit as in claim 15, **characterized in that** the device (10, 110) is mounted above an upper wall (16) of the container or containing tank (14), attached to said upper wall (16) by means of attachment means (28) and inserted through an aperture (15) in said container or containing tank (14).

17. Unit as in claim 15, **characterized in that** the device (10, 110) is mounted above an upper wall (51) of the refrigeration unit, attached to said upper wall (51) by means of attachment means (28) and inserted through an aperture (15) provided in said container or containing tank (14).

18. Unit as in claim 15, **characterized in that** the device (10, 110) is mounted suspended below an upper wall (51) of the refrigeration unit, attached to said upper wall (51) by means of attachment means (28) and inserted through an aperture (15) in said container or containing tank (14).

## Patentansprüche

1. Vorrichtung zum Bewegen einer Flüssigkeit (11), welche, entlang einer gemeinsamen Achse (Y) angeordnet, enthält:
eine Motoranordnung (18),
eine Ventilationseinheit (33) zum Kühlen der Motoranordnung (18),
Bewegungselemente (21, 23), welche kinematisch mit der Motoranordnung (18) verbunden sind, wobei die Bewegungselemente (21, 23) dazu ausgelegt sind, zumindest teilweise in die Flüssigkeit (11) eingetaucht zu werden, und welche durch die Motoranordnung (18) angetrieben werden können, um die Flüssigkeit (11) zu bewegen,
**dadurch gekennzeichnet, dass** die Ventilationseinheit (33) entlang der Achse (Y), zwischen der Motoranordnung (18) und den Bewegungselementen (21, 23), angeordnet ist, um somit die Motoranordnung (18) von der Flüssigkeit (11) zu distanzieren, wobei die Motoranordnung (18) einen Behältnisaufbau (13, 113) enthält, welcher in der Nähe zu der Ventilationseinheit (33) und einem Motorkörper (25) angeordnet ist, wobei der Behältnisaufbau (13, 113) vom geschlossenen Typ ist und im Inneren eine Behälterkammer (13a) hat, in welcher der Motorkörper (25) positioniert ist, wobei der Motorkörper (25) bezogen auf die Außenwelt im Wesentlichen isoliert ist, wobei der Behältnisaufbau (13, 113) einen oder mehrere Durchgänge (17) außerhalb der Behälterkammer (13a) hat, welche an einer Seite mit der Ventilationseinheit (33) und an der anderen Seite mit der Außenseite des Behältnisaufbaus (13, 113) in Verbindung stehen, wobei der Durchgang von Kühlluft, welche von der Ventilationseinheit (33) ankommt, durch den einen oder die mehreren Durchgänge (17) auftritt, wobei der eine oder die mehreren Durchgänge (17) ausgelegt sind, die Kühlluft entlang der Außenfläche des Behältnisaufbaus (13, 113) zu richten, um somit die Motoranordnung (18) zu kühlen.

2. Vorrichtung nach Anspruch 1, **dadurch gekennzeichnet, dass** der Behältnisaufbau (13, 113) außerhalb, zumindest an der Seitenfläche, Wärmetauschelemente (25a, 25e) hat, welche zum Wärmetausch mit der Kühlluft, welche durch den einen oder die mehreren Durchgänge (17) von der Ventilationseinheit (33) ankommt, geeignet sind, um somit den Motorkörper (25) indirekt zu kühlen.

3. Vorrichtung nach Anspruch 1 oder 2, **dadurch gekennzeichnet, dass** der Behältnisaufbau (13, 113) ein Ablenkelement (43) am oberen Teil hat, welches ausgelegt ist, die Kühlluft von der Ventilationseinheit (33) zu einer oberen Seite (18b) des Behältnisaufbaus (13, 113) abzulenken.

4. Vorrichtung nach einem der Ansprüche 1 bis 3, **dadurch gekennzeichnet, dass** die Ventilationseinheit (33) direkt mit einer unteren Seite (18a) des Behältnisaufbaus (13, 113) der Motoranordnung (18) verbunden ist.

5. Vorrichtung nach einem der vorhergehenden Ansprüche, **dadurch gekennzeichnet, dass** sie einen Halteaufbau (20) enthält, welcher dazu ausgelegt ist, die Bewegungselemente (21, 23) zu halten, welcher an einer Seite mit den Bewegungselementen (21, 23) und an der anderen Seite mit der Ventilationseinheit (33) verbunden ist.

6. Vorrichtung nach einem der vorhergehenden Ansprüche, **dadurch gekennzeichnet, dass** die Ventilationseinheit (33) im Inneren einen Kühllüfter (30) und ein Behältniselement (35) enthält, welches einen Belüftungssitz (32) hat, innerhalb dessen der Kühllüfter (30) gelagert ist, wobei das Behältniselement (35) eine obere Öffnung (35d), mittels derer der Kühllüfter (30) zur Motoranordnung (18) gerichtet ist, und eine untere Wand (35b), durch welche der Kühllüfter (30) Luft aufnimmt, hat.

7. Vorrichtung nach Anspruch 6, **dadurch gekennzeichnet, dass** sie eine Vielzahl von Luftlöchern (34, 36) hat, welche an der unteren Wand (35b) erstellt sind, durch welche der Kühllüfter (30) die Luft zum Kühlen der Motoranordnung (18) aufnimmt.

8. Vorrichtung nach Anspruch 6 oder 7, **dadurch gekennzeichnet, dass** sie ein Verbindungselement (39) enthält, welches sich von der unteren Wand (35b) erstreckt, zur Verbindung mit dem Halteaufbau (20), um somit einen festgelegten Kopplungsbereich (41) zu bestimmen.

9. Vorrichtung nach Anspruch 7 oder 8, **dadurch gekennzeichnet, dass** die Luftlöcher erste Löcher (34), welche innerhalb des Verbindungselements (39) erstellt sind, und zweite Löcher (36), welche außerhalb des Kopplungsbereichs (41) zwischen dem Verbindungselement (39) und dem Halteaufbau (20) angeordnet sind, enthalten.

10. Vorrichtung nach Anspruch 8 oder 9, **dadurch gekennzeichnet, dass** sie dritte Luftlöcher (38) hat, welche an der Seitenfläche des Verbindungselements (39) erstellt sind.

11. Vorrichtung nach einem der vorhergehenden Ansprüche, **dadurch gekennzeichnet, dass** sie vierte Luftlöcher (38a) hat, welche an der Seitenfläche der Ventilationseinheit (33) erstellt sind.

12. Vorrichtung nach Anspruch 6, **dadurch gekennzeichnet, dass** das Behältniselement der Ventilationseinheit (33) durch einen einzelnen Körper ausgebildet ist, welcher derart geformt ist, dass er einen Kühllüfter mit einer Relativkammer zum Fördern der Kühlluft zur Motoranordnung (18) bestimmt.

13. Vorrichtung nach Anspruch 5, **dadurch gekennzeichnet, dass** die Bewegungselemente ein Hydraulikpumpenelement (23) enthalten, wobei der Halteaufbau (20) einstückig mit der Ventilationseinheit (33) und mit dem Hydraulikpumpenelement (23) erstellt ist.

14. Vorrichtung nach einem der vorhergehenden Ansprüche, **dadurch gekennzeichnet, dass** die Achse (Y) vertikal ausgerichtet ist.

15. Kühleinheit, welche enthält:
einen Behälter oder einen Behältertank (14), welcher eine Kühlkammer (12) hat, in welcher eine Kühlflüssigkeit (11) enthalten ist;
eine Vorrichtung (10, 110) zum Bewegen der Flüssigkeit (11) nach einem der vorhergehenden Ansprüche, welche, zumindest teilweise in der Kühlkammer (12) eingesetzt, oberhalb des Behälters oder des Behältertanks (14) befestigt ist.

16. Einheit nach Anspruch 15, **dadurch gekennzeichnet, dass** die Vorrichtung (10, 110) oberhalb einer oberen Wand (16) des Behälters oder des Behältertanks (14) befestigt ist, wobei sie mittels Befestigungselemente (28) an der oberen Wand (16) angebracht ist und durch eine Öffnung (15) im Behälter oder Behältertank (14) eingesetzt ist.

17. Einheit nach Anspruch 15, **dadurch gekennzeichnet, dass** die Vorrichtung (10,110) oberhalb einer oberen Wand (51) der Kühleinheit befestigt ist, wobei sie mittels Befestigungselemente (28) an der oberen Wand (51) angebracht ist und durch eine Öffnung (15) eingesetzt ist, welche im Behälter oder Behältertank (14) bereitgestellt ist.

18. Einheit nach Anspruch 15, **dadurch gekennzeichnet, dass** die Vorrichtung (10,110) unterhalb einer oberen Wand (51) der Kühleinheit aufgehängt befestigt ist, wobei sie mittels Befestigungselemente (28) an der oberen Wand (51) angebracht ist und durch eine Öffnung (15) im Behälter oder Behältertank (14) eingesetzt ist.

## Revendications

1. Dispositif permettant de déplacer un liquide (11), comprenant, disposé le long d'un axe commun (Y),
- un ensemble de moteur (18),
- une unité de ventilation (33) permettant de refroidir l'ensemble de moteur (18),
- des moyens de déplacement (21, 23), raccordé cinématiquement audit ensemble de moteur (18), lesquels moyens de déplacement (21, 23) sont capables d'être au moins partiellement submergés dans ledit liquide (11) et peuvent être entraînés par l'ensemble de moteur (18) afin de déplacer le liquide (11),
**caractérisé en ce que** ladite unité de ventilation (33) est disposée le long dudit axe (Y), entre ledit ensemble de moteur (18) et lesdits moyens de déplacement (21, 23), afin de mettre à distance ledit ensemble de moteur (18) par rapport au liquide (11), dans lequel ledit ensemble de moteur (18) comprend une structure de confinement (13, 113) disposée à proximité de ladite unité de ventilation (33) et un corps de moteur (25), ladite structure de confinement (13, 113) étant de type fermé et comportant un compartiment de logement (13a) en son intérieur dans lequel ledit corps de moteur (25) est situé, ledit corps de moteur (25) étant sensiblement isolé par rapport à l'extérieur, dans lequel ladite structure de confinememt (13, 113) comprend une ou plusieurs voies de passage (17), externes audit compartiment de logement (13a), qui sont en communication sur un côté avec ladite unité de ventilation (33) et de l'autre côté avec l'extérieur de la structure de confinement (13, 113), le passage d'air de refroidissement en provenance de l'unité de ventilation (33) se faisant au travers desdites une ou plusieurs voies de passage (17), lesdites une ou plusieurs voies de passage (17) étant conformées pour diriger l'air de refroidissement le long de la surface externe de la structure de confinement (13, 113) afin de refroidir ledit ensemble de moteur (18).

2. Dispositif selon la revendication 1, **caractérisé en ce que** la structure de confinement (13, 113) comporte, à l'extérieur, au moins sur la surface latérale, des moyens d'échange de chaleur (25a, 25e) adaptés pour un échange de chaleur avec l'air de refroidissement arrivant au travers desdites une ou plusieurs voies de passage (17) depuis l'unité de ventilation (33) afin de refroidir le corps de moteur (25) indirectement.

3. Dispositif selon la revendication 1 ou 2, **caractérisé en ce que** ladite structure de confinement (13, 113) comprend des moyens de déflecteur (43) au niveau de la partie supérieure, pouvant défléchir l'air de refroidissement en provenance de l'unité de ventilation (33) vers un côté supérieur (18b) de ladite structure de confinement (13, 113).

4. Dispositif selon la revendication 1, 2, ou 3, **caractérisé en ce que** l'unité de ventilation (33) est directement raccordée à un côté inférieur (18a) de la structure de confinement (13, 113) de l'ensemble de moteur (18).

5. Dispositif selon l'une quelconque des revendications précédentes, **caractérisé en ce qu'**il comprend une structure de support (20), capable de supporter les moyens de déplacement (21, 23), qui est raccordée sur un côté aux moyens de déplacement (21, 23) et sur l'autre côté à l'unité de ventilation (33).

6. Dispositif selon l'une quelconque des revendications précédentes, **caractérisé en ce que** l'unité de ventilation (33) comprend un ventilateur de refroidissement (30) et un élément de confinement (35) à l'intérieur duquel se trouve un appui d'aération (32) à l'intérieur duquel ledit ventilateur de refroidissement (30) est logé, ledit élément de confinement (35) ayant une ouverture supérieure (35d) au moyen de laquelle le ventilateur de refroidissement (30) fait face en direction de l'ensemble de moteur (18) et une paroi inférieure (35b), au travers de laquelle le ventilateur de refroidissement (30) admet de l'air.

7. Dispositif selon la revendication 6, **caractérisé en ce qu'**il comprend une pluralité de trous d'aération (34, 36) réalisés sur la paroi inférieure (35b) au travers desquels le ventilateur de refroidissement (30) reçoit l'air afin de refroidir l'ensemble de moteur (18).

8. Dispositif selon la revendication 6 ou 7, **caractérisé en ce qu'**il comprend un élément de raccordement (39) qui s'étend à partir de la paroi inférieure (35b) pour raccorder ladite structure de support (20), afin de définir une région de couplage déterminée (41).

9. Dispositif selon les revendications 7 et 8, **caractérisé en ce que** lesdits trous d'aération comprennent des premiers trous (34) réalisés à l'intérieur de l'élément de raccordement (39) et des deuxièmes trous (36) disposés à l'extérieur de la région de couplage (41) entre l'élément de raccordement (39) et ladite structure de support (20).

10. Dispositif selon la revendication 8 ou 9, **caractérisé en ce qu'**il comprend des troisièmes trous d'aération (38) réalisés sur la surface latérale de l'élément de raccordement (39).

11. Dispositif selon l'une quelconque des revendications précédentes, **caractérisé en ce qu'**il comprend des quatrièmes trous d'aération (38a) réalisés sur la surface latérale de l'unité de ventilation (33).

12. Dispositif selon la revendication 6, **caractérisé en ce que** l'élément de confinement de l'unité de ventilation (33) est constitué par un seul corps formé de façon à définir un ventilateur de refroidissement avec une chambre relative permettant d'acheminer l'air de refroidissement vers l'ensemble de moteur (18).

13. Dispositif selon la revendication 5, **caractérisé en ce que** lesdits moyens de déplacement comprennent un organe de pompage hydraulique (23), ladite structure de support (20) étant constituée d'une seule pièce avec ladite unité de ventilation (33) et avec ledit organe de pompage hydraulique (23).

14. Dispositif selon l'une quelconque des revendications précédentes, **caractérisé en ce que** ledit axe (Y) est vertical.

15. Unité de réfrigération comprenant :
- un contenant, ou un réservoir de confinement (14) qui comprend un compartiment de réfrigération (12) où un liquide de refroidissement (11) est contenu ;
- un dispositif (10, 110) permettant de déplacer le liquide (11) selon l'une quelconque des revendications précédentes, monté au moins partiellement inséré dans le compartiment de réfrigération (12) au-dessus du contenant ou du réservoir de confinement (14).

16. Unité selon la revendication 15, **caractérisée en ce que** le dispositif (10, 110) est monté au-dessus d'une paroi supérieure (16) du contenant ou du réservoir de confinement (14), fixé à ladite paroi supérieure (16) au moyen de moyens de fixation (28) et inséré à travers une ouverture (15) dans ledit contenant ou réservoir de confinement (14).

17. Unité selon la revendication 15, **caractérisée en ce que** le dispositif (10, 110) est monté au-dessus d'une paroi supérieure (51) de l'unité de réfrigération, fixé à ladite paroi supérieure (51) au moyen de moyens de fixation (28) et inséré à travers une ouverture (15) située dans ledit contenant ou réservoir de confinement (14).

18. Unité selon la revendication 15, **caractérisée en ce que** le dispositif (10, 110) est monté suspendu sous une paroi supérieure (51) de l'unité de réfrigération, fixé à ladite paroi supérieure (51) au moyen de moyens de fixation (28) et inséré à travers une ouverture (15) dans ledit contenant ou réservoir de confinement (14).
